# EUROPEAN PATENT APPLICATION

(11) **EP 1 981 111 A1**
(43) Date of publication of application: **15.10.2008**
(21) Application number: 07707343.5
(22) Date of filing: 24.01.2007
(51) Int. Cl.: H01M 8/04, H01M 8/02, H01M 8/10

(54) **FUEL CELL**

(30) Priority: 30.01.2006 JP 2006021295
(71) Applicant: Kabushiki Kaisha Toshiba, Minato-ku, Tokyo 105-8001 (JP)
(72) Inventor: YOSHIDA, Yuichi, Tokyo 105-8001 (JP); SATO, Yuichi, Tokyo 105-8001 (JP); SATOH, Asako, Tokyo 105-8001 (JP)
(74) Representative: Henkel, Feiler & Hänzel
(86) International application number: PCT/JP2007/051096
(87) International publication number: WO 2007/086432

(57) **Abstract**

A fuel cell comprises a membrane electrode assembly 1 including an anode 5, a cathode 3 and an electrolyte membrane 6, a fuel reserving section 10 which reserves a liquid fuel 11, a cover 17 which is arranged on an outside of the cathode and has an oxidant introduction port 16, and a first thermal insulation member 18 which is laminated on at least either an outside surface or inside surface of the cover 17 and has an opening 19 at a position opposite to the oxidant introduction port.

## Description

### Technical Field

The present invention relates to a fuel cell.

### Background Art

Various electronic devices such as personal computers and portable telephones have been recently small-sized with the development of semiconductor technologies and an attempt has been made to use fuel cells as power sources of these small-sized devices. The fuel cell has the advantage that it can generate electricity merely by supplying a fuel and an oxidant and can continuously generate electricity only by replenishing or exchanging the fuel. Therefore, if the fuel cell can be small-sized, it is a very advantageous system to operate portable electronic devices. Particularly, in the case of a direct methanol fuel cell (DMFC), methanol having a high energy density is used and current can be directly drawn from methanol on an electrode catalyst. Also, no reformer is necessary, so that this fuel cell can be small-sized. Further, the handling of the fuel is easy as compared to the case of the hydrogen gas fuel. Therefore, the DMFC is a promising technology as the power for small-sized devices.

When DMFC is classified by a supply method, it is divided into a vapor supply type DMFC in which a liquid fuel is vaporized and then, the vaporized fuel is fed to a fuel cell by a blower or the like, a liquid supply type DMFC in which a liquid fuel is supplied to a fuel cell by a pump or the like and an internal vaporization DMFC, in which the liquid fuel is vaporized in the cell to supply the vaporized fuel to the anode. An example of the internal vaporization type DMFC is disclosed in Japanese Patent No. 3413111.

The internal vaporization type DMFC shown in Japanese Patent No. 3413111 is provided with a fuel penetration layer that supports a liquid fuel and a fuel vaporization layer that diffuses a vaporized component of the liquid fuel retained in the fuel penetration layer. A vaporized liquid fuel is thus supplied to the fuel electrode by such a structure.

Jpn. Pat. Appln. KOKAI Publication No. 2001-283888 also discloses an internal vaporization type DMFC in which a thermal insulating material is provided on the outside periphery of an electromotive section formed with a fuel leakage preventive film that prevents a liquid fuel from leaking, at the side surface of a fuel electrode, that is, in each space between a container and an oxidant gas passage and between the container and a fuel penetration layer, to thereby prevent the cell reaction heat from dissipating to the outside, thereby obtaining a stable output for a long period of time.

However, since the fuel cell described in Jpn. Pat. Appln. KOKAI publication No. 2001-283888 has a configuration in which the thermal insulating material is in contact with the fuel penetration layer, the amount of methanol to be vaporized is increased and therefore, the amount of methanol to be transmitted to the oxidant electrode is increased, giving rise to the problem that a high output is not obtained by crossover.

### Disclosure of Invention

It is an object of the present invention to provide a fuel cell improved in output characteristic.

### [Means for achieving the object]

According to the present invention, there is provided a fuel cell comprising:
a membrane electrode assembly including an anode, a cathode and an electrolyte membrane provided between the anode and the cathode;
a fuel reserving section which reserves a liquid fuel;
a fuel vaporization section which supplies a vaporized component of the liquid fuel to the anode;
a water-retentive plate which limits a vaporization of water from the cathode;
a cover which is arranged on an outside of the water-retentive plate and has an oxidant introduction port; and
a first thermal insulation member which is laminated on at least either an outside surface or inside surface of the cover and has an opening at a position opposite to the oxidant introduction port.

According to the present invention, there is provided a fuel cell comprising:
a membrane electrode assembly including an anode, a cathode, and an electrolyte membrane provided between the anode and the cathode;
a fuel reserving section which reserves a liquid fuel;
a fuel vaporization section to supply a vaporized component of the liquid fuel to the anode;
an anode current collecting section arranged on the anode of the membrane electrode assembly;
a cathode current collecting section arranged on the cathode of the membrane electrode assembly; and
thermal insulation members which are laminated on the anode current collecting section and on the cathode current collecting section and have gas release holes.

According to the present invention, there is provided a fuel cell comprising:
a membrane electrode assembly including an anode, a cathode and an electrolyte membrane provided between the anode and the cathode;
a fuel reserving section which reserves a liquid fuel;
a cover which is arranged on an outside of the cathode and has an oxidant introduction port; and
a first thermal insulation member which is laminated on at least either an outside surface or inside surface of the cover and has an opening at a position opposite to the oxidant introduction port.

According to the present invention, there is provided a fuel cell comprising:
a membrane electrode assembly including an anode, a cathode, and an electrolyte membrane provided between the anode and the cathode;
a fuel reserving section which reserves a liquid fuel;
an anode current collecting section arranged on the anode of the membrane electrode assembly;
a cathode current collecting section arranged on the cathode of the membrane electrode assembly; and
thermal insulation members which are laminated on the anode current collecting section and on the cathode current collecting section and have gas release holes.

### Brief Description of Drawings

FIG. 1 is a schematic sectional view showing a direct methanol type fuel cell according to a first embodiment of the present invention.
FIG. 2 is a schematic plan view showing a thermal insulation member in FIG. 1.
FIG. 3 is a schematic sectional view showing a direct methanol type fuel cell according to a second embodiment of the present invention.
FIG. 4 is a schematic sectional view showing a direct methanol type fuel cell according to a third embodiment of the present invention.
FIG. 5 is a characteristic curve showing the relation between the maximum output and cell temperature in a direct methanol type fuel cell in each of Examples 1 to 3 and Comparative Example.
FIG. 6 is a schematic sectional view showing another direct methanol type fuel cell according to the first embodiment in the present invention.

### Best Mode for Carrying Out the Invention

Embodiments of according to the present invention will be explained with reference to the drawings.

### (First embodiment)

A water-retentive plate can limit the evaporation of water from a cathode and therefore, an amount of water retained in the cathode can be increased with the progress of the power generating reaction, thereby making it possible to produce the situation where the amount of water retained in the cathode is larger than that retained in the anode. As a result, the reaction for the diffusion of the water contained in the cathode to the anode through the electrolyte membrane can be promoted, whereby a resistance to the catalyst reaction in the anode can be decreased.

A sudden drop in the temperature of a cover can be limited by thermally insulating the outside surface of the cover by a first thermal insulation member, bringing about a reduction in temperature between the water-retentive plate and the cover. As a result, since water vapor condensation (or liquidation of water vapor) on the water-retentive plate can be suppressed, water clogging in the cathode caused by flooding can be reduced. For this, an oxidant gas can be stably supplied to the cathode. From these results, the output characteristic of the fuel cell can be improved.

The water vapor condensation (liquidation of water vapor) can also be suppressed by laminating the first thermal insulation member on the inside surface of the cover. As a result, water clogging in the cathode caused by flooding can be reduced, so that an oxidant gas can be stably supplied to the cathode. From these results, the output characteristic of the fuel cell can be improved.

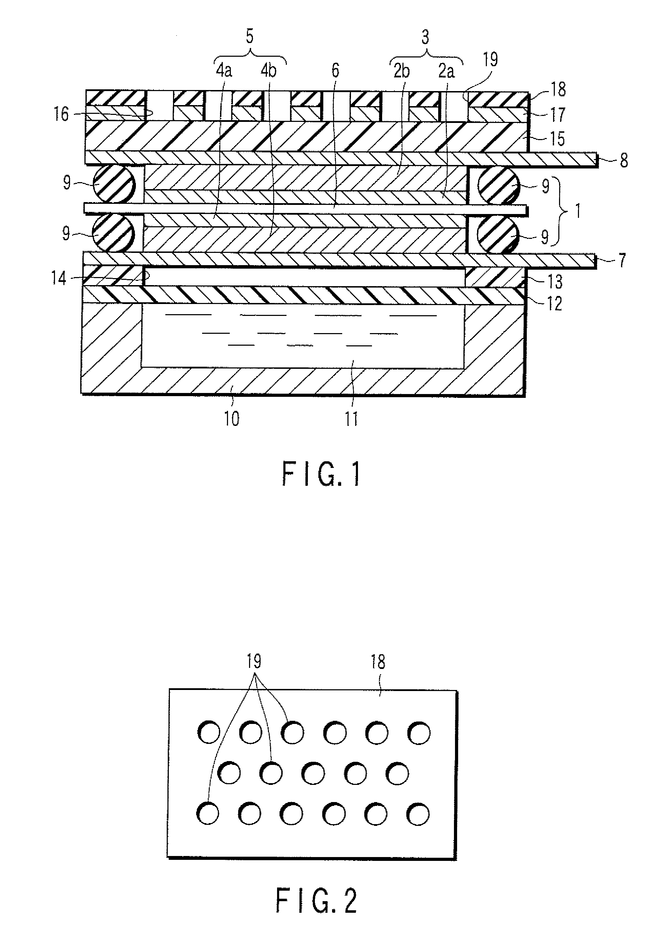

A fuel cell according to a first embodiment will be explained with reference to FIGS. 1 and 2. FIG. 1 is a schematic sectional view showing a direct methanol type fuel cell according to the first embodiment of the invention. FIG. 2 is a schematic plan view showing a thermal insulation member shown in FIG. 1.

As shown in FIG. 1, a membrane electrode assembly (MEA) 1 comprises a cathode (oxidant electrode) 3 including a cathode catalyst layer 2a and a cathode diffusion layer 2b, an anode (fuel electrode) 5 including an anode catalyst layer 4a and an anode gas diffusing layer 4b, and a proton conductive electrolyte membrane 6 interposed between the cathode catalyst layer 2a and the anode catalyst layer 4a.

The cathode catalyst layer 2a desirably contains cathode catalyst particles and a proton conductive resin. Also, the anode catalyst layer 4a preferably contains anode catalyst particles and a proton conductive resin.

Examples of the cathode catalyst and anode catalyst may include single metals (Pt, Ru, Rh, Ir, Os, Pd and the like) of platinum group elements and alloys containing platinum group elements. As the cathode catalyst, platinum is preferably used, but the cathode catalyst is not limited to platinum. As the anode catalyst, Pt-Ru having high resistance to methanol and carbon monoxide is preferably used, but the anode catalyst is not limited to these materials. Alternatively, a supported catalyst using a conductive support such as a carbon material may be used or a non-supported catalyst may be used.

Available examples of the proton conductive resin contained in the cathode catalyst layer 2a, anode catalyst layer 4a and proton conductive electrolyte membrane 6 include fluororesins having a sulfonic acid group such as perfluorocarbon sulfonic acid, hydrocarbon type resins having a sulfonic acid group, and inorganic materials such as tungstic acid and phosphotungstic acid.

The cathode catalyst layer 2a is laminated on the cathode gas diffusing layer 2b and the anode catalyst layer 4a is laminated on the anode gas diffusing layer 4b. The cathode gas diffusing layer 2b serves to supply oxidant gas uniformly to the cathode catalyst layer 2a. On the other hand, the anode gas diffusing layer 4b serves to supply a fuel uniformly to the anode catalyst layer 4a. As the cathode gas diffusing layer 2b and anode gas diffusing layer 4b, for example, porous carbon paper may be used.

An anode conductive layer 7 as an anode current collecting section is laminated on the anode gas diffusing layer 4b of the membrane electrode assembly 1. On the other hand, a cathode conductive layer 8 as a cathode current collecting section is laminated on the cathode gas diffusing layer 2b of the membrane electrode assembly 1. The anode conductive layer 7 and the cathode conductive layer 8 serve to improve the conductivity of the cathode and anode. Also, gas release holes (not shown) through which oxidant gas or vaporized fuel transits are opened in each of the anode conductive layer 7 and the cathode conductive layer 8. For example, a gold electrode obtained by supporting a Au foil on a PET substrate may be used for the anode conductive layer 7 and the cathode conductive layer 8.

One of seal materials 9 having a rectangular frame form is formed in such a manner as to surround the cathode 3 on the proton conductive electrolyte membrane 6. Also, the other is formed in such a manner as to surround the anode 5 on the opposite surface of the proton conductive electrolyte membrane 6. The seal material 9 functions as an O-ring that prevents the fuel or oxidant from leaking from the membrane electrode assembly 1.

A liquid fuel tank 10 as a fuel storage section is located on the anode side (under side of the membrane electrode assembly 1 in FIG. 1) of the membrane electrode assembly 1. The liquid fuel tank 10 is filled with a liquid fuel 11 constituted of liquid methanol or a methanol aqueous solution. The concentration of the methanol aqueous solution is preferably designed to be as high as more than 50 mol%. Also, the purity of pure methanol is preferably designed to be 95% by weight or more and 100% by weight or less. The liquid fuel received in the liquid fuel tank 10 is unnecessarily limited to the methanol fuel but may be, for example, an ethanol fuel such as an ethanol aqueous solution and pure ethanol, a propanol fuel such as a propanol aqueous solution and pure propanol, a glycol fuel such as a glycol aqueous solution and pure glycol, dimethyl ether, formic acid or other liquid fuels. In any case, a liquid fuel corresponding to a fuel cell is received.

A fuel vaporization section, for example, a gas-liquid separating membrane 12, that supplies a vaporized component of the liquid fuel to the anode is arranged between the liquid fuel tank 10 and the anode 5. The gas-liquid separating membrane 12 enables only a vaporized component of the liquid fuel to transit but prevents the liquid fuel transiting. It is possible that only the vaporized component of the liquid fuel transits the gas-liquid separating membrane 12 to supply the vaporized fuel to the anode 5. For example, a water repellent porous film may be used as the gas-liquid separating membrane 12.

A frame 13 is arranged between the gas-liquid separating membrane 12 and the anode conductive layer 7. A space surrounded by the frame 13 functions as a vaporized fuel reservoir 14 that controls the amount of the vaporized fuel to be supplied to the anode.

On the other hand, a water-retentive plate 15 that restrains the vaporization of the water produced in the cathode catalyst layer 2a is laminated on the cathode conductive layer 8 of the membrane electrode assembly 1. The water-retentive plate 15 is preferably made of an electrical insulating material which is inert to methanol and has resistance to dissolution, oxygen transmitting ability and moisture permeability. Examples of such an electrical insulating material may include polyolefins such as polyethylene and polypropylene.

A cover 17 in which plural introduction ports 16 are formed to introduce oxidant gas (for example, air) is laminated on the water-retentive plate 15. The cover 17 also serves to improve adhesiveness when pressure is applied to a stack including the membrane electrode assembly 1 and is therefore formed of a metal such as SUS304, carbon steel, stainless steel, alloy steel, titanium alloys or nickel alloys.

A first thermal insulation member 18 covers the outside surface of the cover 17. The first thermal insulation member 18 is formed of a heat insulator sheet in which gas release holes 19 are opened at the positions corresponding to the oxidant introduction ports 16, as shown in FIG. 2. The heat conductivity of the thermal insulation material is preferably in a range of 0.01 W/(m·K) or more and 1 W/(m·K) or less. Also, as the thermal insulation material, those having resistance to acids and to solvents are preferable. Examples of the thermal insulation material include relatively hard type resins such as polyethylene (PE), polyethylene terephthalate (PET), polyether ether ketone (PEEK), polyphenylene sulfide (PPS), polyether imide (PEI), polyimide (PI) and polytetrafluoro-ethylene (PTFE), and glass epoxy resins.

As to the fuel cell having such a configuration, the following is detailed explanations as to the situation where a current (flow of electrons) occurs, that is, the so-called generating reaction occurs.

The vaporized component of the liquid fuel in the liquid fuel tank 10 is supplied to the anode catalyst layer (also called a fuel electrode catalyst layer) 4a through the gas-liquid separating membrane 12. Protons (H⁺) and electrons (e⁻) are produced by an oxidation reaction of the fuel in the anode catalyst layer 4a. When, for example, methanol is used as the fuel, the catalyst reaction produced in the anode catalyst layer 4a is shown in the following equation (1).

CH₃OH + H₂O → CO₂ + 6H⁺ and 6e⁻ (1)

The protons (H⁺) produced in the anode catalyst layer 4a are diffused to the cathode catalyst layer (also called an air electrode catalyst layer) 2a through the proton conductive membrane 6. Also, at the same time, the electrons produced in the anode catalyst layer 4a flow through an external circuit connected to the fuel cell, work for a load (resistance and the like) of the external circuit and then flow into the cathode catalyst layer 2a.

The oxidant gas such as air is made to pass through the cathode conductive layer 8 and the cathode gas diffusing layer 2b from the gas release hole 19 of the first thermal insulation member 18 and the oxidant introduction port 16 of the cover 17 and are finally supplied to the cathode catalyst layer 2a. Oxygen in the oxidant gas undergoes a reducing reaction with the protons (H⁺) which have been diffused through the proton conductive membrane 6, together with the electrons (e⁻) which have been made to flow through the external circuit to produce a reaction product. When, for example, air is used as the oxidant gas, the reaction of oxygen which is contained in the air is as shown by the following equation (2) in the cathode catalyst layer 2a, and in this case, the reaction product is water (H₂O).

1.5O₂ + 6H⁺ + 6e⁻ → 3H₂O (2)

The reactions given by the equations (1) and (2) occur at the same time, whereby the power generating reaction in the fuel cell is completed. The combustion reaction is totally given by the following equation (3).

CH₃OH + 1.5O₂ → CO₂ + 2H₂O (3)

Because the water-retentive plate 15 is arranged between the cathode 3 and the cover 17, the vaporization of water from the cathode 3 is suppressed, and along with the progress of the power generating reaction, the amount of water retained in the cathode catalyst layer 2a is increased. This can bring about the situation where the amount of water retained in the cathode catalyst layer 2a is larger than that in the anode catalyst layer 4a. As a result, the reaction for the diffusion of the water produced in the cathode catalyst layer 2a to the anode catalyst layer 4a through the proton electrolyte membrane 6 can be promoted by an osmotic pressure phenomenon. Therefore, a resistance to the catalyst reaction in the anode 5 can be decreased.

The first thermal insulation member 18 can restrain the heat produced by catalytic and combustion reactions from radiating from the cover 17, thereby making it possible to decrease a difference in temperature between the cover 17 and the water-retentive plate 15. As a result, condensation of water vapor (or liquidation of water vapor) on the water-retentive plate 15 can be suppressed, and therefore, the clogging of the cathode 3 with water which is caused by flooding can be reduced. Oxidant gas can be thereby supplied stably to the cathode 3.

These results show that the output characteristic of the fuel cell can be improved.

Moreover, because no thermal insulation member is not formed in the area extending from the fuel tank 10 to the vaporized fuel reservoir 14, abnormal vaporization of the liquid fuel can be avoided.

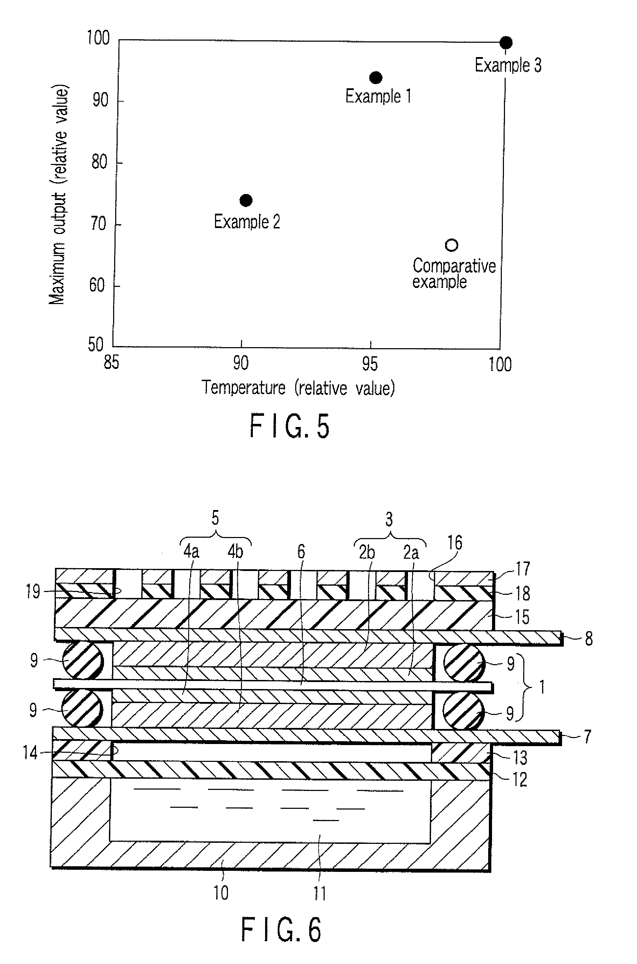

In FIG. 1 mentioned above, the first thermal insulation member 18 is laminated on the outside surface of the cover 17. However, the first thermal insulation member 18 may be laminated on the inside surface of the cover 17. FIG. 6 shows one example of this structure.

The condensation of water vapor (or liquidation of water vapor) can be suppressed by laminating the first thermal insulation member 18 on the inside surface of the cover 17 as shown in FIG. 6, and it is therefore possible to restrain the cathode 3 from being clogged with water by flooding. This enables stably supply of the oxidant gas to the cathode 3, so that the output characteristic of the fuel cell can be improved. Also, the first thermal insulation member 18 may be laminated on both the inside and outside surfaces of the cover 17.

### (Second embodiment)

A membrane electrode assembly can be thermally insulated without any abnormal vaporization of a liquid fuel by laminating a thermal insulation member on an anode current collecting section and cathode current collecting section. The improvement in anode reaction rate raises the utilization efficiency of a fuel, so that a fuel loss such as crossover is decreased. As a consequence, a drop in potential caused by crossover is reduced and it is therefore possible to raise the output characteristic. Also, the volume expansion/shrinkage of the membrane electrode assembly is repeated along with the power generating reaction. However, because the membrane electrode assembly is sandwiched between the thermal insulation members, a reduction in adhesion caused by the volume expansion/shrinkage can be suppressed, so as to decrease a contact resistance. The output characteristic of the fuel cell can also be improved thereby.

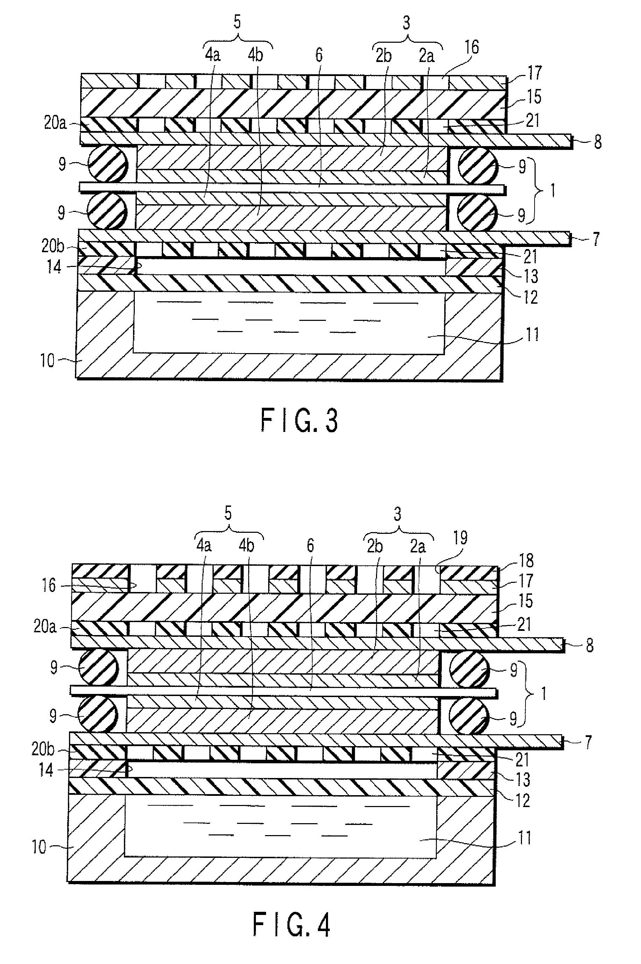

A fuel cell according to a second embodiment will be explained with reference to FIG. 3. FIG. 3 is a schematic sectional view showing a direct methanol type fuel cell according to the second embodiment of the present invention. The same members as those explained in the above FIGS. 1 and 2 are designated by the same symbols and explanations of these members are omitted.

In the fuel cell according to the second embodiment, second thermal insulation members 20a and 20b are used in place of the first thermal insulation member. The second thermal insulation member 20a is arranged between the cathode conductive layer 8 and the water-retentive plate 15. Also, the second thermal insulation member 20b is arranged between the anode conductive layer 7 and the frame 13. The second thermal insulation members 20a and 20b each are formed of a heat insulator sheet in which gas release holes 21 which are to be a passage of the oxidant gas or vaporized fuel are opened. The heat-conductivity of the thermal insulation material is preferably in a range of 0.01 W/(m·K) or more and 1 W/(m·K) or less. Also, as the thermal insulation material, those having acid resistance and solvent resistance are preferable. Examples of the thermal insulation material may include rubber materials such as styrene butadiene rubber (SBR), acrylonitrile butadiene rubber (NBR), ethylene propylene rubber (EPDM), fluorine rubber, silicon rubber, acryl rubber and urethane rubber, fiber materials such as nonwoven fabrics and felts, foam materials such as foam polyethylenes and foam polystyrenes and vacuum thermal insulation materials. The second thermal insulation members 20a and 20b may have different heat conductivities or may have the same heat conductivity.

The membrane electrode assembly 1 can be thermally insulated without any abnormal vaporization of the liquid fuel by arranging the second thermal insulation members 20a and 20b on the anode conductive layer 7 and on the cathode conductive layer 8. Because an improvement in the rate of anode reaction raises fuel utilization efficiency, a fuel loss such as crossover is reduced. As a result, a reduction in potential caused by crossover is reduced, and therefore the output characteristic can be improved. Also, the volume expansion/shrinkage of the membrane electrode assembly 1 is repeated along with the power generating reaction. However, because the membrane electrode assembly 1 is sandwiched between the second thermal insulation members 20a and 20b, a reduction in adhesion caused by the volume expansion/shrinkage can be suppressed, whereby contact resistance can be decreased. The output characteristic of the fuel cell can also be improved thereby.

It is not an essential requirement whether or not the fuel cell according to the second embodiment is provided with the water-retentive plate 15. However, when the fuel cell comprises the water-retentive plate 15, the membrane electrode assembly 1 is thermally insulated by the second thermal insulation members 20a and 20b, which can suppress the occurrence of the phenomenon that the cathode 3 is clogged with water by flooding. This results in stabilization of the output characteristic.

### (Third embodiment)

A fuel cell according to a third embodiment will be explained with reference to FIG. 4. FIG. 4 is a schematic sectional view showing a direct methanol type fuel cell according to the third embodiment. The same members as those explained in FIGS. 1 to 3 are designated by the same symbols and explanations of these members are omitted.

In the fuel cell according to the third embodiment, all the first thermal insulation member 18 and the second thermal insulation members 20a and 20b are used. The first thermal insulation member 18 may be arranged either on the outside surface of the cover 17 as shown in FIG. 4 or on the inside surface of the cover 17, or on the both.

According to the fuel cell according to the third embodiment, the clogging of the cathode 3 with water caused by flooding can be prevented, the membrane electrode assembly 1 can be thermally insulated and the contact resistance can be reduced. It is therefore possible to improve the output characteristic sufficiently. When the membrane electrode assembly 1 is sufficiently thermally insulated, the reaction rate of the anode is improved. The improvement in anode reaction rate raises the utilization efficiency of the fuel, so that a fuel loss such as crossover is decreased. As a result, a drop in potential caused by crossover is reduced and it is therefore possible to raise the output characteristic.

When the heat conductivity [W/(m·K)] of the first thermal insulation member is λ₁ and the heat conductivity [W/(m·K)] of the second thermal insulation member is λ₂, the following relationship is desirably established: λ₁/100 ≤ λ₂ ≤ λ₁/10. When the heat conductivity λ₂ is designed to be λ₁/100 or more, the membrane electrode assembly 1 can be sufficiently thermally insulated by the application of the reaction heat along with the generation of electricity. Also, when the heat conductivity λ₂ is designed to be λ₁/10 or less, the reaction heat along with the generation of electricity can be conducted to the water-retentive plate through the second thermal insulation member, and therefore, a difference in temperature between the membrane electrode assembly and the water-retentive plate can be decreased. Therefore, when the relation λ₁/100 ≤ λ₂ ≤ λ₁/10 is established, the output characteristic of the fuel cell can be more improved.

Examples of the present invention will be explained in detail with reference to the drawings.

### (Example 1)

### <Production of anode catalyst layer>

A perfluorocarbon sulfonic acid solution (concentration of the perfluorocarbon sulfonic acid: 20% by weight) as a proton conductive resin, and water and methoxypropanol as dispersion media were added to carbon black carrying anode catalyst particles (Pt:Ru = 1:1), and the carbon black carrying the anode catalyst particles was dispersed to prepare a paste. The obtained paste was applied to a porous carbon paper used as an anode gas diffusing layer to obtain an anode catalyst layer 100 µm in thickness.

### <Production of cathode catalyst layer>

A perfluorocarbon sulfonic acid solution (concentration of the perfluorocarbon sulfonic acid: 20% by weight) as a proton conductive resin, and water and methoxypropanol as dispersion mediums were added to carbon black carrying cathode catalyst particles (Pt), and the carbon black carrying the cathode catalyst particles was dispersed to prepare a paste. The obtained paste was applied to a porous carbon paper used as a cathode gas diffusing layer to obtain a cathode catalyst layer 100 µm in thickness.

### <Production of membrane electrode assembly (MEA)>

A perfluorocarbon sulfonic acid membrane (trade name: Nafion Membrane, manufactured by Du Pont) having a thickness of 50 µm and a water content of 10 to 20% by weight was interposed as an electrolyte membrane between the anode catalyst layer and cathode catalyst layer manufactured in the above manner. The obtained product was then processed by a hot press to obtain a membrane electrode assembly (MEA) of 30 mm × 30 mm.

A 100-µm-trick anode current collecting section obtained by sticking an Au foil to a PET substrate was laminated on the anode gas diffusing layer of the membrane electrode assembly. Also, a 100-µm-thick cathode current collecting section obtained by sticking an Au foil to a PET substrate was laminated on the cathode gas diffusing layer of the membrane electrode assembly.

A polyethylene porous film having a thickness of 500 µm, an air permeability of 2 sec./100 cm³ (measured by a measuring method prescribed in JIS P-8117) and a moisture permeability of 4000 g/m² 24h (measured by a measuring method prescribed in JIS L-1099 A-1) was prepared as a water-retentive plate.

Also, a silicon rubber sheet 200 µm in thickness was prepared as a gas-liquid separating membrane.

As a first thermal insulation member, a PEEK plate was prepared which was provided with gas release holes formed at the positions corresponding to an oxidant introduction ports of a cover as shown in the foregoing FIG. 2 and the PEEK plate had a heat conductivity λ₁ of 0.25 [W/(m·K)] and a thickness of 2 mm.

The obtained membrane electrode assembly was combined with the water-retentive plate, gas-liquid membrane and first thermal insulation member to fabricate an internal vaporization type direct methanol type fuel cell according to the first embodiment, the fuel cell having the structure shown in the above FIGS. 1 and 2. In this case, pure methanol having a purity of 99.9% by weight was supplied to the fuel tank.

### (Example 2)

An internal vaporization type direct methanol type fuel cell according to the second embodiment, which had the structure shown in the above FIG. 3, was assembled in the same manner as explained in Example 1 except that the second thermal insulation member was used in place of the first thermal insulation member and laminated on the anode current collecting section and cathode current collecting section on the membrane electrode assembly.

As the second thermal insulation member, a vacuum thermal insulation material was used which was provided with gas release holes through which oxidant gas or vaporized fuel passed, the vacuum thermal insulation material having a heat conductivity λ₂ of 0.01 [W/(m·K)] and a thickness of 1 mm.

### (Example 3)

An internal vaporization type direct methanol type fuel cell according to the third embodiment, which had the structure shown in the above FIG. 4, was assembled by laminating the second thermal insulation member on the anode current collecting section and cathode current collecting section on the membrane electrode assembly of the fuel cell of Example 1. As the second thermal insulation member, the same type as that explained in Example 2 was used. The relation λ₂ = λ₁/25 was established between the heat conductivity λ₁ of the first thermal insulation member and the heat conductivity λ₂ of the second thermal insulation member. Therefore, the above relationship λ₁/100 ≤ λ₂ ≤ λ₁/10 was satisfied.

### (Comparative Example)

An internal vaporization type direct methanol type fuel cell was assembled in the same manner as explained in Example 1 except that the first thermal insulation member was formed on the entire surface including the members from the fuel tank 10 to the cover 17.

With regard to each of these fuel cells, its cell center temperature and maximum output were measured, and the results of the measurement were shown in Table 5 wherein the maximum output and cell temperature of Example 3 were each defined as 100.

As shown in FIG. 5, the fuel cells obtained in Examples 1 to 3 each had a higher maximum output than the fuel cell obtained in Comparative Example. The fuel cells obtained in Examples 1 and 3 in which the first thermal insulation member was arranged on the outside surface of the cover were each superior in output characteristic to the fuel cell obtained in Example 2 in which the second thermal insulation member was arranged on the anode current collecting section and on the cathode current collecting section.

In the fuel cell obtained in Comparative Example, the thermal insulation member was arranged on the part surrounding the electromotive section as shown in Jpn. Pat. Appln. KOKAI Publication No. 2001-283888. Therefore, liquid fuel methanol was vaporized in a large amount to thereby cause crossover of methanol, resulting in reduced output.

The present invention is not limited to the above embodiments just as it is and its structural elements may be modified and embodied without departing from the spirit of the invention in its practical stage. Also, plural structural elements disclosed in the above embodiments may be properly combined to form various inventions. For example, some of all the structural elements may be eliminated shown in the embodiments. Moreover, the structural elements used in different embodiments may be combined.

In, for example, the above explanations, a structure is employed in which the fuel reserving section is arranged on the under part of the membrane electrode assembly (MEA) as the structure of the fuel cell. However, a passage may be arranged between the fuel reserving section and MEA to supply the liquid fuel contained in the fuel reserving section, to MEA through the passage. Also, the explanations are furnished taking a passive type fuel cell as an example of the structure of the fuel cell body. However, the present invention may also be applied to an active type fuel cell and also to a semi-passive type fuel cell using a pump or the like as a part of fuel supply means. The same action effect as that explained above is obtained even by these structures.

### Industrial Applicability

According to the present invention, a fuel cell improved in output characteristic can be provided.

## Claims

1. A fuel cell comprising:
a membrane electrode assembly including an anode, a cathode and an electrolyte membrane provided between the anode and the cathode;
a fuel reserving section which reserves a liquid fuel;
a cover which is arranged on an outside of the cathode and has an oxidant introduction port; and
a first thermal insulation member which is laminated on at least either an outside surface or inside surface of the cover and has an opening at a position opposite to the oxidant introduction port.

2. A fuel cell according to claim 1, further comprising a cathode current collecting section arranged on the cathode of the membrane electrode assembly, an anode current collecting section arranged on the anode of the membrane electrode assembly, and a second thermal insulation member which is laminated on the cathode current collecting section and on the anode current collecting section and has gas release holes.

3. A fuel cell according to claim 2, wherein the fuel cell satisfies the relationship, λ₁/100 ≤ λ₂ ≤ λ₁/10, when a heat conductivity [W/(m·K)] of the first thermal insulation member is λ₁ and a heat conductivity [W/(m·K)] of the second thermal insulation member is λ₂.

4. A fuel cell according to claim 1, further comprising a fuel vaporization section which supplies a vaporized component of the liquid fuel to the anode and a water-retentive plate which limits a vaporization of water from the cathode, wherein the cover is arranged on an outside of the cathode and water-retentive plate.

5. A fuel cell comprising:
a membrane electrode assembly including an anode, a cathode, and an electrolyte membrane provided between the anode and the cathode;
a fuel reserving section which reserves a liquid fuel;
an anode current collecting section arranged on the anode of the membrane electrode assembly;
a cathode current collecting section arranged on the cathode of the membrane electrode assembly; and
thermal insulation members which are laminated on the anode current collecting section and on the cathode current collecting section and have gas release holes.

6. A fuel cell according to claim 5, further comprising a fuel vaporization section to supply a vaporized component of the liquid fuel to the anode.
